**Europäisches Patentamt**

**European Patent Office**

**Office européen des brevets**

(19)

(11) Numéro de publication: **0 156 672**
**B1**

(12) ## FASCICULE DE BREVET EUROPÉEN

(45) Date de publication du fascicule du brevet:
18.05.88

(51) Int. Cl.⁴: **F 16 K 47/04,** F 01 D 17/14,
F 16 L 55/02

(21) Numéro de dépôt: 85400282.1

(22) Date de dépôt: 18.02.85

(54) **Soupape pour stabiliser l'écoulement de fluides lors de détente accompagnée de dégradation d'énergie cinétique.**

(30) Priorité: 01.03.84 FR 8403206

(43) Date de publication de la demande:
02.10.85 Bulletin 85/40

(45) Mention de la délivrance du brevet:
18.05.88 Bulletin 88/20

(84) Etats contractants désignés:
BE CH DE FR GB IT LI LU NL SE

(56) Documents cité:
EP-A-0 023 172
FR-A-864 007
FR-A-1 059 185
FR-A-2 035 369
US-A-3 857 542

REVUE FRANCAISE DE MECANIQUE, no. 78, 1981,
pages 13-19, M. PLUVIOSE: "Etude des instabilités
d'écoulement dans les soupapes de réglage de
turbines à vapeur"

(73) Titulaire: **CENTRE TECHNIQUE DES INDUSTRIES
MECANIQUES, 52, avenue Félix- Louat B.P. 67,
F-60304 Senlis Cédex (FR)**

(72) Inventeur: **Pluviose, Michel, 56, rue de la Chapelle,
F-02240 Sissy par Ribemont (FR)**

(74) Mandataire: **Loriot, Jacques, c/o SA. FEDIT-
LORIOT 38, avenue Hoche, F-75008 Paris (FR)**

## Description

La présente invention concerne des améliorations aux écoulements instables de fluides, dans les soupapes d'installations industrielles.

Il est fréquent dans les installations industrielles véhiculant des fluides compressibles d'effectuer des détentes à travers des orifices séparant des enceintes à pressions différentes, sans récupération d'énergie cinétique.

C'est notamment le cas dans les soupapes utilisées dans les centrales électriques à vapeur (voir p. ex. US-A-3 857 542).

Le débit masse est la plupart du temps imposé, ainsi que les niveaux de pression amont et aval, et le rapport de pression est souvent suffisamment important pour permettre l'établissement de régimes supersoniques.

Le principe général de tels dispositifs est d'abord la mise en vitesse du fluide, puis la dégradation de cette vitesse par frottements visqueux et ondes de choc dans une évolution à enthalpie d'arrêt constante.

Dans un écoulement issu d'un orifice, et échappant à l'atmosphère ou dans une grande capacité, la forme des écoulements à la sortie de l'orifice est différente suivant le rapport de détente, néanmoins les conditions de pression de part et d'autre de l'orifice sont généralement telles que l'écoulement est en première estimation sonique dans le plan de sortie de l'orifice.

Par mélange visqueux avec le fluide ambiant, le jet se détèriorera après une longueur variable selon le rapport de détente, longueur généralement supérieure à 10 fois le diamètre de l'orifice.

Dans le cas d'un écoulent bidimesionnel issu d'un orifice, et échappant dans une cavité aval, le jet supersonique vient se coller sur une paroi ou sur l'autre assez brutalement mais sans instabilité.

En effet, par entraînement visquex, le jet ralentit et accélère les couches de fluide périphérique. La masse entraînée est renouvelée par du fluide issu de l'aval. Comme il y a indépendance entre les couches de mélange, la plus petite perturbation déstabilise le système.

Lorsque la pression aval est diminuée, le jet s'évase tellement que la cavité demurée en communication avec l'aval ne peut plus être alimentée en fluide de mélange, des oscillations longitudinales et transversales de la veine fluide sont alors observées. Si à partir de cette position, la pression chute encore, la veine se stabilise et devient symétrique. En écoulent dans une cavité, des observations analogues sont faites, elles sont plus complexes à analyser car le jet tournoie dans la cavité.

L'écoulement issu de plusieurs orifices en parallèle et échappant dans une grande capacité est utilisé systématiquement dans l'industrie. Il se justifie par l'augmentation des surfaces de frottement en resultant à l'aval des orifices, car la perte par contraction brusque et laminage dans le trou est généralement mineure par rapport à la perte de vitesse restante.

La détente est bloqée dès que les lignes de jet se rencontrent et tout se passe dès lors comme si l'écoulent émanait d'un trou unique se détendant jusqu'à la pression peur laquelle ces lignes de jet se rejoignent, ce qui reduit brutalemennt la surface de fottement. De plus, dans ce cas, il se produit de brutales augmentations de longueur du jet.

Ainsi, jusqu'ici les techniques connues ne permettent pas d'assurer un mélange satisfaisant entre les jets et le fluide ambiant, et ne permettent pas non plus d'assurer une stabilité de la veine fluide.

Les écoulements de retour longeant les parois ne peuvent donc alimenter en fluide de mélange les jets supersoniques qui ne se dégradent dès lors qu'à travers des systèmes d'ondes de choc obliques ou droites plus ou moins stables lors de l'amorçage de la veine.

Il est illusoire de vouloir mélanger des jets à vitesses analogues.

Enfin les écoulements instables provoquent de fortes vibrations dégradant les structures, notamment les soupapes.

L'invention a pour but de pallier les inconvénients précités des soupapes connues utilisées pour contrôler des écoulements de fluides.

L'invention a pour objet une soupape pour fluide compressible à détente interne supersonique du type dont l'écoulement du fluide lors de la détente est stabilisé par plusieurs écoulements contigus de répartition de vitesses différentes, mélangés avec dégradation d'énergie cinétique.

Une telle soupape comprend suivant l'invention, un clapet axial "hémisphérique" lisse présentant en aval un prolongement axial cylindrique ou tronconique raccordé par une courbure progressive à la partie "hémisphérique" du clapet, tandis que le siège de clapet, en forme générale de tuyère convergente-divergente est creusé d'une pluralité d'alvéoles longitudinaux aérodynamiques espacés à la périphérie intérieure du siège, commençant abruptement en amont vers leur partie la plus creuse, en aval de la zone annulaire de contact de la partie sphérique du clapet avec une partie semi-torique du siège en position de fermeture de la soupape, et diminuant progressivement de profondeur pour se fondre plus en aval dans la paroi divergente du siège, les surfaces en vis-à-vis du clapet et du siège, dans les positions d'ouverture incomplète de la soupape, formant des tuyères supersoniques en dehors des alvéoles, et des tuyères subsoniques avec les alvéoles.

Dans une telle soupape, la paroi du clapet peut former dans la paroi en vis-à-vis de chaque alvéole creusé dans le siège, une tuyère convergente-divergente à zone de détente réduite, dont la partie convergente est en amont du commencement de l'alvéole, et la partie divergente s'étend sur au moins une partie de la longeur de l'alvéole.

Le fond des alvéoles peut être parallèle à l'axe de la soupape dans la partie de l'alvéole de profondeur progressivement décroissante, ou s'en écarter.

Suivant un mode de réalisation, chaque alvéole a la forme d'une rainure à section droite rectangulaire, et le fond de chaque alvéole peut former un dièdre d'angle supérieur à 90°, d'arête perpendiculaire à l'axe de la tuyère du siège et dont la paroi en amont est plus courte que la paroi en aval.

Tous les alvéoles peuvent être identiques et régulièrement espacés à la périphérie du siège, ou certains au moins peuvent etre différents.

Il est généralement avantageux que le bord amont de chaque alvéole soit arrondi, et que les alvéoles soient en nombre pair et séparés les uns des autres par des distances égales à leur largeur.

On atteint généralement de meilleurs résultats lorsque la face terminale du prolongement axial du clapet est perpendiculaire à l'axe, et présente un évidement central.

Pour une réalisation pratique d'une soupape suivant l'invention, on obtient de bons résultats lorsque le rapport $\frac{rc}{R}$ entre le rayon de la partie hémisphérique du clapet rc et le rayon R au col de la tuyère formée par le siège de soupape est compris entre 1,1 et 1,6, le rapport $\frac{re}{rc}$ où re est le rayon du prolongement axial cylindrique du clapet est compris entre 0,6 et 0,97, le rapport $\frac{h}{R}$, où h est la hauteur du prolongement du clapet est compris entre 0 et 0,4, le rayon rq de raccordement du prolongement cylindrique à la partie hémisphérique du clapet étant égal à 0,6R.

De meilleurs résultats sont encore obtenus lorsque le rapport $\frac{R'}{R}$ entre le rayon R' de la surface semi torique du siège et le rayon R au col de la tuyère formée par le siège de soupape est compris entre 0,1 et 1, l'angle β de divergence de la tuyère du siège est compris entre 3° et 4°, le rapport $\frac{P}{R}$, où P est la profondeur maximum, depuis l'axe de la soupape, des alvéoles creusés dans le siège est égal à $(2-\frac{re}{R})k$, re étant le rayon du prolongement axial du clapet et k un coefficient compris entre 0,7 et 1,3, le rapport $\frac{R''}{R}$, où R'' est le rayon de raccordement en amont du fond de l'alvéole avec la surface semi torique du siège, est compris entre 0,75 et 1,25, le nombre d'alvéoles étant au moins égal à $\frac{3,1416\,P}{P-re}$, où re est le rayon du prolongement axial cylindrique du clapet.

L'invention sera mieux comprise à la lecture de la description détaillée qui va suivre et à l'examen des dessins annexés qui représentent, à titre d'exemple non limitatif un mode de réalisation de l'invention.

La figure 1 est une vue en coupe axiale suivant la ligne A-B de la figure 2 d'une soupape "hémisphérique" suivant l'invention.

La figure 2 est une demi-vue schématique en coupe partielle suivant la ligne II-II de la figure 1.

La figure 3 est une vue schématique en coupe axiale d'une variante de forme d'alvéole du siège de la soupape de la figure 1 et 2.

La figure 4 est une vue schématique en coupe d'un détail de la figure 1.

Les éléments correspondant sur les diverses figures sont désignés par les mêmes références numériques.

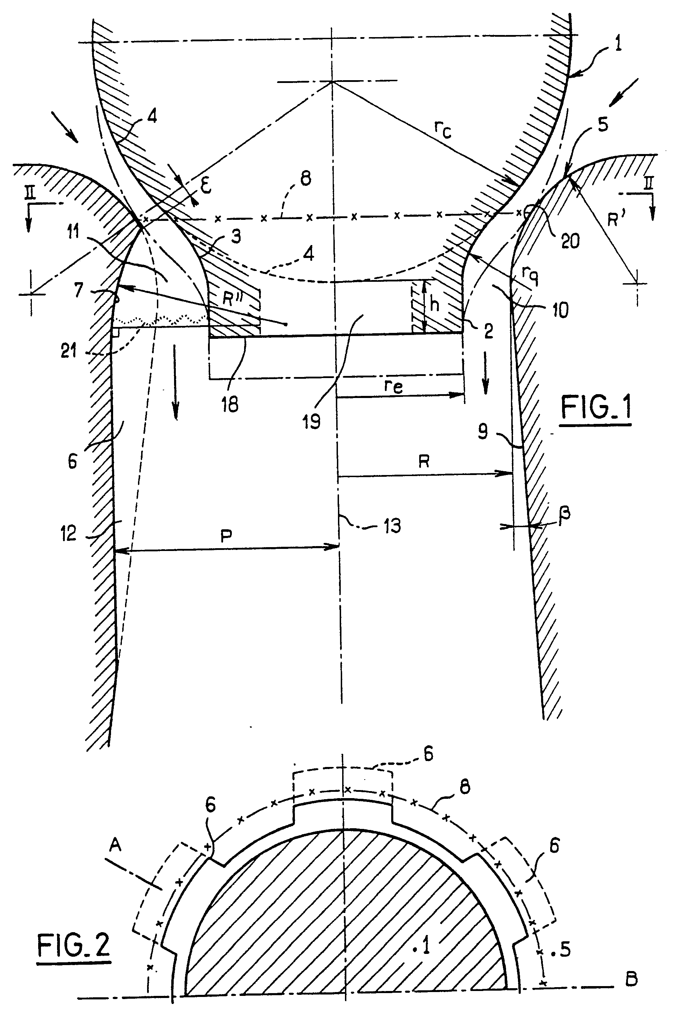

La soupape représentée sur les figures 1 à 4 est une soupape pour fluide compressible à échappement supersonique constituée essentiellement par un clapet 1 dont la surface hémisphérique 4 vient s'appliquer à la fermeture contre la surface d'appui semi-torique 20 du siège de soupape 5.

Le clapet 1 peut être déplacé axialement pour l'ouverture et la fermeture de la soupape de façon classique par des moyens non représentés.

Suivant l'invention le clapet axial hémisphérique 1 est lisse et présente en aval un prolongement axial 2 cylindrique qui est raccordé par une courbure progressive 3 à la partie hémisphérique 4.

Le siège de clapet 5 a la forme générale d'une tuyère convergente-divergente classique. Mais ce siège est creusé suivant l'invention de six alvéoles longitudinaux 6 régulièrement espacés, dont la partie la plus creuse 7 commence de façon brusque à une distance ε aussi petite que le permet la construction de la zone annulaire et linéaire 8 de contact de la partie sphérique 4 du clapet avec la partie semi torique 20 du siège en position de fermeture de la soupape.

Le creux de l'alvéole diminue progressivement de profondeur 12 pour mourir en fin dans la paroi divergente du siège 5, suivant un profil aérodynamique.

Le fond de l'alvéole 6 est parallèle à l'axe 13 de la soupape mais il peut diverger vers l'aval. Ainsi les parois de chaque alvéole 6 forment avec les parois en vis-à-vis 4-3 et 2 du clapet 1 une tuyère convergente-divergente 11 à zone de détente réduite dont la forme évolue suivant la levée du clapet entre la position de fermeture représentée en traits mixtes sur la figure 1 et les positions de levée partielle, dont l'une est représentée en traits pleins sur la figure 1.

Dans le mode de réalisation représenté sur les figures 1 et 2 chaque alvéole a la forme d'une rainure à section droite rectangulaire et la succession de rainures forme une série de crans découpés dans la périphérie du siège 5 de la soupape en-dessous de la ligne de fermeture 8.

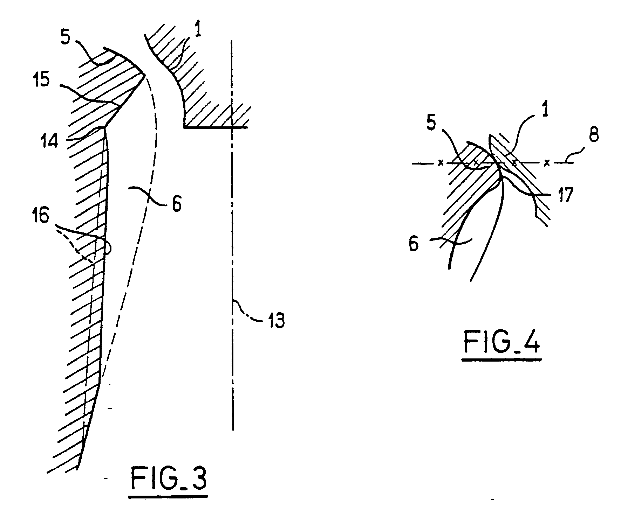

Dans la variante représentée sur la figure 3, le fond de l'alvéole 6 forme un dièdre d'angle supérieur à 90° dont l'arête 14 est perpendiculaire à l'axe 13 de la soupape. La paroi amont 15 du dièdre est plus courte que la paroi aval 16.

Dans la vue de détail agrandie de la figure 4, où le clapet 1 est représenté en position de fermeture de la plaque contre le siège 5 de la soupape, on voit que le bord amont de l'alvéole 6 est arrondi en 17 immédiatement à partir de la zone de la ligne de fermeture 8.

Sur la figure 1 on a schématisé par un trait ondulé pointillé 21 une onde de choc de recompression à section droite. La face inférieure 18 du prolongement 2 du clapet est représentée évidée en 19 afin d'améliorer les performances de la soupape.

Les avantages pratiques de cette disposition dans les soupapes classiques sont étudiés notamment dans l'article "Etude des Instabilités d'écoulement dans les soupapes de réglage de turbines à vapeur" par Michel Pluviose paru dans la Revue Française de Mécanique de 1981, N° 78, pages 13 à 19.

Dans un exemple de réalisation pratique d'une telle soupape, on prendra les valeurs suivantes:
$\frac{r_c}{R} = 1,36$, $\frac{r_q}{R} = 0,275$, $\frac{r_e}{R} = 0,75$, $\frac{h}{R} = 0,6$ et pour le siège de la soupape $\frac{R'}{R} = 0,74$, $\beta = 3,3°$, $\frac{P}{R} =$

$1,29$ $\frac{R''}{R} = 1$ les alvéoles étant au nombre de 6, le nombre entier le plus proche du rapport = $\frac{3,1416 \times R}{1,29\,R - 0,75\,R}$

Tous ces rapports sont ramenés au rayon R qui correspond à la partie la plus étroite du col de la tuyère formé par le siège de soupape 5.

$r_c$ = rayon de la partie hémisphèrique du clapet

$r_q$ = rayon de raccordement du prolongement cylindrique 2 à la partie hémisphérique 4 du clapet

$h$ est la hauteur du prolongement du clapet

$r_e$ = rayon du prolongement cylindrique du clapet

$R'$ = rayon de la surface semi torique 20 du siège

$R''$ = rayon de raccordement amont du fond 7 de l'alvéole 6

$P$ = profondeur maximum de l'alvéole à partir de l'axe de la soupape

$\beta$ = est l'angle du divergent à la tuyère formé par le siège 5.

La largeur des alvéoles est égale à la distance periphérique séparant les alvéoles les uns des autres.

Les rayons $r_c$, $R'$, $r_q$, $R''$ peuvent être des courbes de forme plus complexe, par exemple des courbes obtenues par des combinaisons de rayons tangents, ou des courbes mathématiques.

Les parties supersoniques et subsoniques n'apparaissent que pour des rapports de détente donnés avec géométrie fixée par le degré de levée du clapet. Pour d'autres rapports, les tuyères ne sont plus supersoniques et les jets internes sont décollés du côté des alvéoles, ce qui facilite les écoulements en retour et améliore la stabilité de l'écoulement.

Une telle soupape ne présente pas les inconvénients des soupapes classiques telles celles décrites dans le brevet US-A-3 857 542 et le brevet FR-A-2 035 369 dans lesquels à l'inverse de l'invention, le siège de soupape élément fixe, est lisse tandis que la paroi du clapet, élément mobile, est entaillée de fentes radiales qui dévient l'écoulement vers le centre. L'invention évite notamment les instabilités d'écoulement dans les soupapes hémisphériques classiques qui apparaissent même avec des clapets évidés en aval dans le but d'empêcher les recompressions subsoniques ou supersoniques par onde de choc. Ces soupapes classiques présentent néanmoins des instabilités dues à la présence de jets supersoniques ou subsoniques qui perturbent le fonctionnement et secouent les structures.

Ces jets se collent sur une paroi, ou sur une autre de manière anarchique, en particulier lorsque les jets formés entre les clapets et le siège se rejoignent au centre en une nappe devenant instable par pompage alternatif de la cavité évidée.

Cette instabilité des soupapes classiques semble découler du mélange qui doit se faire entre le fluide ambiant et le jet. Lorsque le débit du fluide de mélange n'est pas suffisant, l'écoulement devient dissymétrique et instable.

Ce phénomène est bien connu par ailleurs lors des détentes supersoniques dans les évasements brusques.

Dans la soupape suivant l'invention, ces inconvénients sont éliminés d'une part par l'utilisation d'un clapet lisse dont l'extrémité aval rentre dans le divergent du siège, ce qui améliore la stabilité en évitant la fermeture de la nappe de jets; et d'autre part, par la presence d'alvéoles aérodynamiques creusés dans le siège débutant par un grand angle par rapport à la paroi et maintenant ensuite l'écoulement parallèle à l'axe, ce qui favorise les dissipations d'énergie au sein du fluide et évite les perturbations sur les parois.

Par ailleurs, le processus de mélange est ainsi amélioré et les phénomènes de jets instables évités par la création de jets subsoniques intercalés entre les jets supersoniques. Ceci provoque un processus de mélange intense, les jets sont stabilisés, les longueurs d'interaction des jets sont réduites, et les bruits sont ainsi atténués.

En effet, sous l'action de la viscosité, le fluide le plus rapide cède une partie de sa quantité de mouvement au fluide le plus lent provoquant une zone de mélange qui améliore l'efficacité du laminage à travers la soupape.

On constate expérimentalement l'absence de rotation de veine susceptible de provoquer des dépressions importantes et instationnaires.

L'invention s'applique également aux soupapes de sûreté fonctionnant en fluide compressible, et celles fonctionnant en fluide incompressible, car la diversification du jet principal en jets à détentes variées améliore également dans ce cas la stabilité globale de la veine fluide.

Dans une soupape suivant l'invention, on éloigne du clapet toute discontinuité ou perturbation de l'écoulement. Le tracé très aérodynamique des alvéoles creusés dans le siège permet une détente importante du fluide en régime supersonique dans ces alvéoles, à faible levée du clapet, tandis que la partie du fluide s'écoulant dans les tuyères normales est elle-même en régime supersonique, mais avec un taux de détente différent. A faible levée, lors de la recompression par onde de choc, les deux écoulements à vitesses très différentes provoquent une dissipation d'énergie importante. Par contre, à forte levée, les alvéoles sont franchement décollés du clapet, ce qui n'est pas le cas des soupapes classiques telles celles des brevets précités.

## Revendications

1. Soupape pour fluide compressible à détente interne supersonique dont l'écoulement du fluide lors de la détente est stabilisé par plusieurs écoulements contigus de répartition de vitesses différentes mélangés avec dégradation d'énergie cinétique, comprenant un clapet (1) à surface hémisphérique (4) coopérant à la fermeture avec une surface d'appui semi-torique (20) d'un siège de soupape (5) dont le clapet (1) peut être éloigné axialement vers l'amont pour l'ouverture de la soupape, soupape <u>caractérisée en ce</u> qu'elle comporte un clapet axial hémisphérique (1) lisse présentant en aval un prolongement axial (2) cylindrique ou tronconique raccordé par une courbure progressive (3) à la partie hémisphérique (4) du clapet; et en ce que le siège de clapet (5) en forme générale de tuyère convergente-divergente, est creusé d'une pluralité d'alvéoles longitudinaux aérodynamiques (6) espacés à la périphérie intérieure du siège (5), commençant abruptement en amont vers leur partie la plus creuse (7) en aval de la zone annulaire de contact (8) de la partie sphérique (4) du clapet (1) avec une partie semi-torique (20) du siège (5) en position de fermeture de la soupape, et diminuant progressivement de profondeur (12) pour se fondre plus en aval dans la paroi divergente (9) du siège (5), les surfaces en vis-à-vis du clapet et du siège, dans les positions d'ouverture incomplète de la soupape formant des tuyères supersoniques (10) en dehors des alvéoles (6) et des tuyères subsoniques (11) avec les alvéoles (6).

2. Soupape, suivant la revendication 1, caractérisée en ce que la paroi du clapet (1) forme, avec la paroi en vis-à-vis de chaque alvéole (6) creusé dans le siège (5), une tuyère convergente-divergente (11) à zone de détente réduite, dont la partie convergente est en amont du commencement de l'alvéole (6), et la partie divergente s'étend sur aumoins une partie de la longueur de l'alvéole (6).

3. Soupape, suivant la revendication 2, caractérisée en ce que le fond des alvéoles (6) est parallèle à l'axe (13) de la soupape, ou s'en éloigne dans la partie de l'alvéole de profondeur progressivement décroissante (12).

4. Soupape, suivant la revendication 2 ou 3, caractérisée en ce que chaque alvéole (6) a la forme d'une rainure à section droite rectangulaire.

5. Soupape, suivant l'une des revendications 1 à 4, caractérisée en ce que le fond de chaque alvéole (6) forme un dièdre d'angle supérieur à 90°, d'arête (14) perpendiculaire à l'axe (13) de la tuyère du siège (5) et dont la paroi en amont (15) est plus courte que la paroi en aval (16).

6. Soupape, suivant l'une des revendications 1 à 5, caractérisée en ce que tous les alvéoles (6) sont identiques et régulièrement espacés à la périphérie du siège (5).

7. Soupape, suivant l'une des revendications 1 à 5, caractérisée en ce que certain au moins des alvéoles (6) sont différents.

8. Soupape, suivant l'une des revendications 1 à 7, caractérisée en ce que le bord amont (17) de chaque alvéole (6) est arrondi.

9. Soupape, suivant l'une des revendications 1 à 8, caractérisée en ce que les alvéoles (6) sont en nombre pair et séparés les uns des autres par des distances égales à leur largeur.

10. Soupape, suivant l'une des revendications 1 à 9, caractérisée en ce que la face terminale (18) du prolongement axial du clapet (1) est perpendiculaire à l'axe et presente un évidement central (19).

11. Soupape, suivant l'une des revendications 1 à 10, caractérisée en ce que le rapport $\frac{rc}{R}$ entre le rayon de la partie hémisphérique (4) du clapet (1) rc et le rayon R au col de la tuyère formée par le siège (5) de soupape est compris entre 1,1 et 1,6, le rapport $\frac{re}{R}$, où re est le rayon du prolongement axial (2) cylindrique du clapet (1) est compris entre 0,6 et 0,97, le rapport $\frac{h}{R}$, où h est la hauteur du prolongement (2) du clapet (1) au-delà du rayon de sa surface hémisphérique (4) est compris entre 0 et 0,4, le rayon rq de raccordement (3) du prolongement cylindrique (2) à la partie hémisphérique (4) du clapet (1) étant égal à 0,6R.

12. Soupape, suivant l'une des revendications 1 à 11, caractérisée en ce que le rapport $\frac{R'}{R}$ entre le rayon R' de la surface semi torique (20) du siège et le rayon R au col de la tuyère formée par le siège (5) de soupape est compris entre 0,1 et 1, l'angle β de divergence de la tuyère du siège (5) est compris entre 3° et 4°, le rapport $\frac{P}{R}$ où P est la profondeur maximum, depuis l'axe (13) de la soupape, des alvéoles (6) creusés dans le siège (5) est égal à (2 - $\frac{re}{R}$)k, re étant le rayon du prolongement axial (2) du clapet et k un coefficient compris entre 0,7 et 1,3, le rapport $\frac{R''}{R}$, où R'' est le rayon de raccordement en amont du fond (7) de l'alvéole (6) avec la surface semi-torique (20) du siège (5), est compris entre 0,75 et 1,25, le nombre d'alvéoles (6) étant au moins égal à $\frac{3,1416 P}{P - re}$, où re est le rayon du prolongement 2 axial cylindrique du clapet (1).

## Patentansprüche

1. Ventil für ein kompressibles Fluid mit interner Überschallexpansion, wobei die Abströmung des Fluids während der Expansion durch mehrere unmittelbar benachbarte Strömungen mit unterschiedlicher Geschwindigkeitsverteilung in Verbindung mit einem kinetischen Energieverlust stabilisiert wird, welches einen Ventilkörper (1) mit einer halbkugelförmigen Fläche (4), die zum Schließen mit einer halbtorusförmigen Fläche (20) eines Ventilsitzes (5) zusammenwirkt, wobei der Ventilkörper (1) axial stromaufwärts zum Öffnen des Ventils verlagerbar ist, aufweist, dadurch gekennzeichnet, daß das Ventil einen axialen, halbkugelförmigen, glatten Ventilkörper (1) mit einer axialen, zylindrischen oder kegelstumpfförmigen stromabwärtigen Verlängerung (2) umfaßt, welche über eine stufenlose Krümmung (3) mit dem halbkugelförmigen Teil (4) des Ventilkörpers verbunden ist, und daß der Ventilsitz (5) in der allgemeinen Gestalt einer Laval-Düse mit einer Mehrzahl von länglichen, aerodynamischen Hohlräumen (6), die am Innenumfang des Sitzes (5) mit Abstand zueinander ausgebildet sind, abrupt stromauf ihrer tiefsten Aushöhlung (7), die sich stromab von dem ringförmigen Berührungsbereich (8) des halbkugelförmigen Teils (4) des Ventilkörpers (1) mit einem halbtorusförmigen Teil (20) des Sitzes (5) im Schließzustand des Ventils befindet, beginnen und sich fortlaufend in der Tiefe (12) vermindern sowie weit stromabwärts in die divergierende Wand (9) des Sitzes (5) eingehen, ausgestattet ist, wobei die einander gegenüberliegenden Flächen des Ventilkörpers und des Sitzes in Stellungen einer unvollständigen Öffnung des Ventils außerhalb der Hohlräume (6) Überschalldüsen (10) und mit den Hohlräumen (6) Unterschalldüsen (11) bilden.

2. Ventil nach Anspruch 1, dadurch gekennzeichnet, daß die Wandung des Ventilkörpers (1) mit der gegenüberliegenden Wandfläche eines im Ventilsitz (5) aufgenommenen Hohlraumes (6) eine Laval-Düse (11) mit einem verminderten Expansionsbereich bildet, wobei sich der konvergente Teil stromauf des Beginns der Aushöhlung (6) befindet und der divergierende Teil sich über wenigstens einen Abschnitt der Länge des Hohlraumes (6) erstreckt.

3. Ventil nach Anspruch 2, dadurch gekennzeichnet, daß die Bodenfläche der Hohlräume (6) parallel zur Achse (13) des Ventils verläuft oder in den Teil des Hohlraumes mit fortlaufend sich vermindernder Tiefe (12) zurücktritt.

4. Ventil nach Anspruch 2 oder 3, dadurch gekennzeichnet, daß jeder Hohlraum (6) die Gestalt einer Rinne mit rechteckigem Querschnitt hat.

5. Ventil nach einem der Ansprüche 1 bis 4, dadurch gekennzeichnet, daß die Bodenfläche eines jeden Hohlraumes (6) zweiflächig mit einem Winkel über 90° ausgebildet ist und eine rechtwinklig zur Achse (13) der Düsenöffnung des Sitzes (5) verlaufende Kante (14) aufweist, wobei die stromaufwärtige Wandfläche (15) kürzer ist als die stromabwärtige Wandfläche (16).

6. Ventil nach einem der Ansprüche 1 bis 5, dadurch gekennzeichnet, daß sämtliche Hohlräume (6) identisch ausgebildet sind und am Umfang des Sitzes (5) regelmäßig beabstandet sind.

7. Ventil nach einem der Ansprüche 1 bis 5, dadurch gekennzeichnet, daß wenigstens gewisse Hohlräume (6) unterschiedlich sind.

8. Ventil nach einem der Ansprüche 1 bis 7, dadurch gekennzeichnet, daß die stromaufwärtige Kante (17) eines jeden Hohlraumes (6) abgerundet ist.

9. Ventil nach einem der Ansprüche 1 bis 8, dadurch gekennzeichnet, daß die Hohlräume (6) in gerader Anzahl vorhanden und voneinander durch Abstände mit gleicher Größe getrennt sind.

10. Ventil nach einem der Ansprüche 1 bis 9, dadurch gekennzeichnet, daß die Stirnfläche (18) der axialen Verlängerung des Ventilkörpers (1) rechtwinklig zur Achse verläuft und mit einer zentralen Aussparung (19) versehen ist.

11. Ventil nach einem der Ansprüche 1 bis 10, dadurch gekennzeichnet, daß das Verhältnis $\frac{rc}{R}$ zwischen dem Radius rc des halbkugelförmigen Teils (4) des Ventilkörpers (1) und dem Radius R am Kragen der vom Ventilsitz (5) gebildeten Düsenöffnung zwischen 1,1 und 1,6 liegt, daß das Verhältnis $\frac{re}{R}$, wobei re der Radius der axialen, zylindrischen Verlängerung (2) des Ventilkörpers (1) ist, zwischen 0,6 und 0,97 liegt, daß das Verhältnis $\frac{h}{R}$, worin h die Höhe der Verlängerung (2) des Ventilkörpers (1) außerhalb des Radius der halbkugelförmigen Fläche (4) ist, zwischen 0 und 0,4 liegt und daß der Radius rq der Verbindung (3) der zylindrischen Verlängerung (2) mit dem halbkugelförmigen Teil (4) des Ventilkörpers (1) gleich 0,6R ist.

12. Ventil nach einem der Ansprüche 1 bis 11, dadurch gekennzeichnet, daß das Verhältnis $\frac{R'}{R}$ zwischen dem Radius R' der halbtorusförmigen Fläche (20) des Sitzes und dem Radius R am Kragen der vom Ventilsitz (5) gebildeten Düsenöffnung zwischen 0,1 und 1 liegt, daß der Divergenzwinkel β der Düsenöffnung des Sitzes (5) zwischen 3° und 4° liegt, daß das Verhältnis $\frac{P}{R}$, worin P die maximale Tiefe der im Sitz (5) ausgenommenen Hohlräume (6) von der Achse (13) des Ventils ist, gleich $(2 - \frac{re}{R})k$ ist, worin re der Radius der axialen Verlängerung (2) des Ventilkörpers sowie k ein Koeffizient zwischen 0,7 und 1,3 sind, daß das Verhältnis $\frac{R''}{R}$, worin R'' der Radius der stromaufwärtigen Verbindung der Bodenfläche (7) des Hohlraumes (6) mit der halbtorusförmigen Fläche (20) des Sitzes (5) ist, zwischen 0,75 und 1,25 liegt und daß die Anzahl der Hohlräume (6) wenigstens gleich $\frac{3,1416 \cdot P}{P - re}$ ist, worin re der Radius der axialen, zylindrischen Verlängerung (2) des Ventilkörpers (1) ist.

**Claims**

1. Valve for compressible fluid with internal supersonic relief, the fluid flow of which at relief is stabilised by several adjacent distribution flows of different speeds mixed with degradation of kinetic energy, comprising a valve (1) with a hemispheric surface (4) working at the closure with a semi-toric support surface (20) of a valve seat (5), the valve (1) of which can be aligned axially upstream for valve opening, valve characterised in that it comprises a smooth axial hemispheric valve with a cylindrical or tapered axial projection (2) downstream connected by a progressive curve (3) at the hemispheric part (4) of the valve; and in that the valve seat (5), generally a diffuser nozzle, is hollowed out from several longitudinal aerodynamic cells (6) spaced on the internal periphery of the seat (5), starting steeply upstream towards their most hollow part (7) downstream of the annular contact zone of the spherical part (4) of valve (1) with a semi-toric part (20) of the seat (5) in valve closing position and progressively reducing in depth (12) to base itself further downstream in the divergent wall (9) of the seat (5), the surfaces opposite the valve and the valve seat, in the incomplete valve opening positions, forming supersonic tuyeres (10) outside the cells (6) and subsonic nozzles (11) with cells (6).

2. Valve, according to Claim 1, characterised in that the valve wall (1) forms, with the wall opposite each cell (6), hollowed in the seat (5) a diffuser nozzle (11) at reduced relief zone, the convergent part of which is upstream from the beginning of the cell (6) and the divergent part extends onto at least one part of the cell (6) length.

3. Valve, according to Claim 2, characterised in that the base of cells (6) is parallel to the axis (13) of the valve, or extends from this into the part of the cell (12) with a progressively decreasing depth.

4. Valve, according to Claim 2 or Claim 3, characterised in that each cell (6) is in the form of a groove of rectangular cross-section.

5. Valve, according to one of Claims 1 to 4, characterised in that the base of each cell (6) forms a dihedron of an angle greater than 90 degrees, with edge (14) perpendicular to the axis (13) of the nozzle of seat (5), the upstream wall (15) of which is shorter than the downstream wall (16).

6. Valve, according to one of claims 1 to 5, characterised in that all cells (6) are identical and regularly spaced on the periphery of the seat (5).

7. Valve, according to one of Claims 1 to 5, characterised in that at least some cells (6) are different.

8. Valve, according to one of Claims 1 to 7, characterised in that the upstream edge (17) of each cell (6) is rounded.

9. Valve, according to one of Claims 1 to 8, characterised in that the cells (6) are paired and separated from each other by distances equal to their width.

10. Valve, according to one of Claims 1 to 9, characterised in that the terminal face (18) of the axial projection of valve (1) is perpendicular to the axis and has central recess (19).

11. Valve, according to one of Claims 1 to 10, characterised in that the ratio rc/R between the radius of hemispheric part (4) of valve (1) rc is the radius R at the neck of the nozzle formed by valve seat (5) is between 1.1 and 1.6, the ratio re/R, where re is the radius of cylindrical axial projection (2) of valve (1) is between 0.6 and 0.97, the ratio h/r, where h is the height of projection (2) of valve (1) beyond the radius of the hemispheric surface (4) is between 0 and 0.4, the radius rq of connection (3) of cylindrical projection (2) to hemispheric part (4) of valve (1) being equal to 0.6R.

12. Valve, according to one of Claims 1 to 11, characterised in that the ratio R'/R between radius R' of the semi-toric surface (20) of the seat and the radius R at the neck of the nozzle formed by valve seat (5) is between 0.1 and 1, the nozzle divergence angle β of seat (5) is between 3 and 4, the ratio P/R, where P is the maximum depth, since the axis (13) of the valve, hollow cells (6) in the seat (5) is equal to (2 - re/R)k, re being the radius of the axial projection (2) of the valve and k a co-efficient between 0.7 and 1.3, the ratio R''/R', where R'' is the radius of the upstream connection of base (7) of cell (6) with semi-toric surface (20) of seat (5) is between 0.75 and 1.25, the number of cells (6) being at least equal to 3,1416P/P-re, where re is the radius of the cylindrical axial projection (2) of the valve (1).

FIG.1

FIG.2

FIG. 3

FIG. 4